# EUROPÄISCHE PATENTSCHRIFT

(11) **EP 3 503 310 B1**
(45) Veröffentlichungstag und Bekanntmachung des Hinweises auf die Patenterteilung: **24.03.2021**
(21) Anmeldenummer: 18203667.3
(22) Anmeldetag: 31.10.2018
(51) Int. Cl.: H01R 24/38, H01R 12/71, H01R 13/66, H01R 24/76, H02G 3/12, H01R 13/24, H01R 13/62, H01R 13/627, H01R 39/00

(54) **ELEKTRISCHES/ELEKTRONISCHES INSTALLATIONSGERÄT**
ELECTRIC/ELECTRONIC INSTALLATION DEVICE
APPAREIL D'INSTALLATION ÉLECTRIQUE/ÉLECTRONIQUE

(30) Priorität: 20.12.2017 DE 102017130678
(43) Veröffentlichungstag der Anmeldung: 26.06.2019
(73) Patentinhaber: Insta GmbH, 58509 Lüdenscheid (DE)
(72) Erfinder: Voigtländer, Andreas, 58509 Lüdenscheid (DE)

(56) Entgegenhaltungen:
- EP-A1- 0 594 937
- EP-A1- 2 461 429
- WO-A1-2016/183354
- DE-A1-102011 111 969

## Beschreibung

Die vorliegende Erfindung geht von einem gemäß Oberbegriff des Hauptanspruches konzipierten elektrischen/elektronischen Installationsgerät aus, welches hauptsächlich aus einem Einsatz (erstes Funktionsmodul) und einem Aufsatz (zweites Funktionsmodul) besteht. Ferner betrifft die vorliegende Erfindung eine Anordnung umfassend ein solches elektrisches/elektronisches Installationsgerät und ein elektrisches/elektronisches Gerät.

Derartige elektrische/elektronische Installationsgeräte finden oftmals im Zusammenhang mit einem Installationssystem eines Gebäudes Verwendung. Der Einsatz (erstes Funktionsmodul) eines solchen Installationsgerätes ist typischerweise so gestaltet, dass dieser in eine handelsübliche Installationsdose eingesetzt und an der zugehörigen Wand und/oder Installationsdose befestigt werden kann. Der Aufsatz (zweites Funktionsmodul) eines solchen Installationsgerätes bildet in der Regel nicht nur die sichtseitige Oberfläche, sondern weist auch die spezifischen Funktionskomponenten auf. So sind Aufsätze bekannt, die beispielsweise über ein Eingabepanel verfügen, über welches dieses Installationsgerät bedient werden kann und/oder weitere angeschlossene elektrische/elektronische Geräte, beziehungsweise angeschlossene elektrische Aktoren, angesteuert werden können. Darüber hinaus sind Aufsätze bekannt, die eine Anzeigeeinheit aufweisen oder insgesamt als Dateneingabeeinheit und Datenausgabeeinheit ausgeführt sind, etwa als Touchscreen-Display. In vielen Fällen weist der Aufsatz zur einfachen Kennzeichnung unterschiedliche Schaltflächen und/oder Piktogramme auf, damit sich dem Benutzer die Bedienung dieses Installationsgerätes auf einfache Art und Weise erschließt.

Durch die DE 10 2015 101 434 B3 ist ein aus einem Einsatz und einem Aufsatz bestehendes elektrisches/elektronisches Installationsgerät bekannt geworden. Im Gehäuse des in einer Installationsdose unterzubringenden Einsatzes (erstes Funktionsmodul) sind mehrere elektrische/elektronische Bauteile sowie zumindest eine erste elektrische Leiterplatte untergebracht. Rückseitig ist der Einsatz mit Verbindungselementen zum Anschluss an ein Installationssystem eines Gebäudes versehen. Frontseitig weist der Einsatz ein elektrisches Steckerteil auf, welches zum Anschluss eines wandseitig anzuordnenden, als Aufsatz ausgebildeten zweiten Funktionsmoduls vorgesehen ist. Dieser Aufsatz weist ein Eingabepanel auf, über welches dieses Installationsgerät und/oder weitere angeschlossene elektrische/elektronische Geräte beziehungsweise angeschlossene elektrische Aktoren angesteuert werden können.

Aus DE 10 2011 111 969 A1 und EP 2 461 429 A1 ist jeweils eine herkömmliche elektrische Steckdose mit einem Stecker bekannt. DE 10 2011 111 969 A1 offenbart den Oberbegriff von Anspruch 1.

Ferner ist aus EP 0 594 937 A1 eine elektrische Steckverbindung bekannt, wobei der Stecker in eine topfförmige Vertiefung eingesteckt ist und durch zwei Bolzen entnahmegesperrt ist. Die durch zwei Bolzen bereitgestellte Verriegelung stellt eine Wirkverbindung zwischen dem eingesteckten Stecker und der Bolzen dar, wobei die Wirkverbindung durch eine Federkraft realisiert ist.

Aus WO 2016/183,354 A1 ist ein elektrisches Schnell-VerbindungsSystem für elektrische/elektronische Geräte bekannt, wobei dieses ein hutförmiges Koppelteil als Teil einer Gehäuseanordnung eines ankoppelbaren Gerätes aufweist.

Ausgehend von einem derart ausgebildeten elektrischen/elektronischen Installationsgerät liegt der vorliegenden Erfindung die Aufgabe zugrunde, ein aus einem Einsatz und aus einem Aufsatz bestehendes elektrisches/elektronisches Installationsgerät zu schaffen, dessen Aufsatz frontseitig zumindest die mechanische Ankopplung vieler verschiedenartig ausgeführter elektrischer/elektronischer Geräte über eine einheitlich ausgeführte Ankoppeleinrichtung ermöglicht und dabei durch die Herstellung einer mechanischen Wirkverbindung die unberechtigte Entnahme eines angekoppelten elektrischen/elektronischen Gerätes wirkungsvoll verhindert.

Erfindungsgemäß wird diese Aufgabe durch die im Hauptanspruch angegebenen Merkmale gelöst.

Bei einer derartigen Ausbildung von elektrischen/elektronischen Installationsgeräten ist besonders vorteilhaft, wenn das als Aufsatz ausgebildete zweite Funktionsmodul zur Ankopplung von elektrischen/elektronischen Geräten eine zylinderförmig gestaltete, topfförmige Vertiefung als Ankoppeleinrichtung aufweist, welche die mechanische, die elektrische sowie die datentechnische Ankopplung ermöglicht. Vorteilhafterweise ist zur elektrischen und datentechnischen Ankopplung eine Koppelleiterplatte vorgesehen, die als Kontaktstellen mehrere kreisförmig angeordnete elektrische Schleifbahnen aufweist. Somit wird vorteilhafterweise ermöglicht, dass die angekoppelten elektrischen/elektronischen Geräte wie Leuchten, Lautsprecher, Kameras, Präsenzmelder, Bewegungsmelder und so weiter auf besonders einfache Art und Weise vom Benutzer durch Verdrehen funktionsoptimiert ausgerichtet werden können, wenn diese gehäuseseitig mit einem passenden, Schleifkontakte aufweisenden, zylindrisch gestalteten Koppelteil ausgerüstet sind und die Riegelelemente der Verriegelungseinrichtung derart ausgestaltet sind, so dass ein Verdrehen des angekoppelten elektrischen/elektronischen Gerätes nicht behindert wird.

Weitere vorteilhafte Ausgestaltungen des erfindungsgemäßen Gegenstandes sind in den Unteransprüchen angegeben. Anhand eines Ausführungsbeispiels sei der erfindungsgemäße Gegenstand näher beschrieben, dabei zeigen:

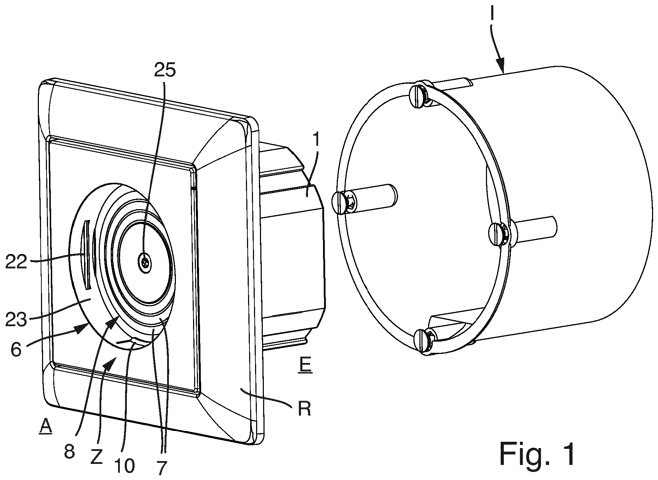

- **Fig. 1:**: prinziphaft ein aus Einsatz und Aufsatz bestehendes elektrisches/elektronisches Installationsgerät im Zusammenbau, räumlich in schräger Draufsicht;
- **Fig. 2:**: prinziphaft den Einsatz in Explosionsdarstellung, räumlich in schräger Draufsicht;

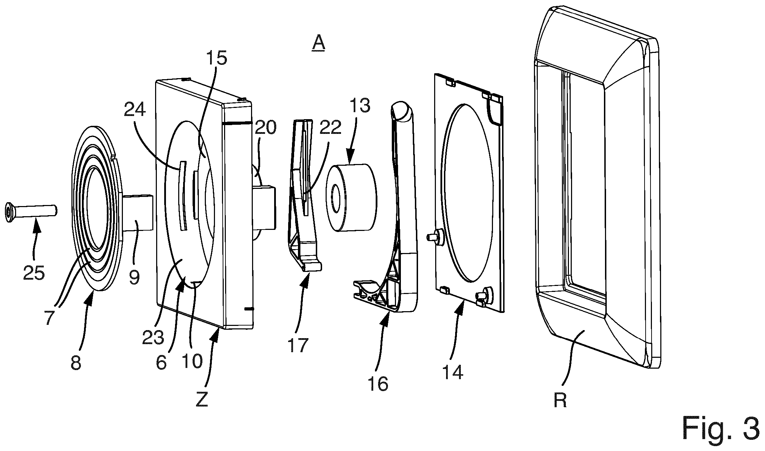

- **Fig. 3:**: prinziphaft den Aufsatz in Explosionsdarstellung, räumlich in schräger Draufsicht;

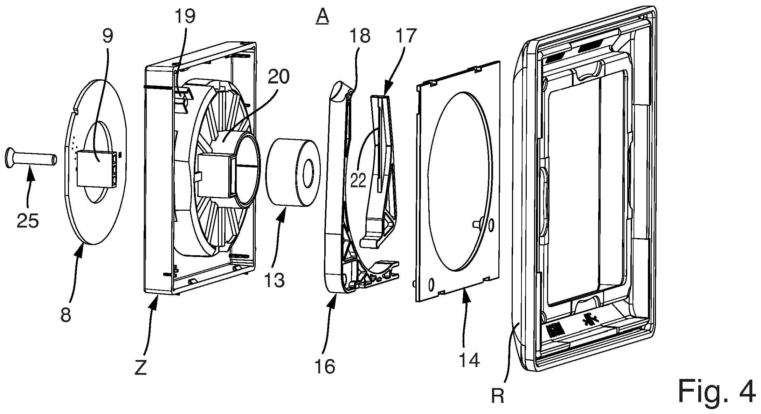

- **Fig. 4:**: prinziphaft den Aufsatz in Explosionsdarstellung, räumlich in schräger Unteransicht;
- **Fig. 5:**: prinziphaft einen Vollschnitt des Koppelteils eines elektrischen/elektronischen Gerätes in Zuordnung zu dem ebenfalls im Vollschnitt dargestellten Zentralstück des Aufsatzes des elektrischen/elektronischen Installationsgerätes;
- **Fig. 6:**: prinziphaft die Unteransicht des Zentralstücks des Aufsatzes des elektrischen/elektronischen Installationsgerätes ohne Abdeckung, wobei sich die beiden Hebel in der Verriegelungsstellung befinden;
- **Fig. 7:**: prinziphaft die Unteransicht des Zentralstücks des Aufsatzes des elektrischen/elektronischen Installationsgerätes ohne Abdeckung, wobei sich die beiden Hebel in der Entriegelungsstellung befinden.

Wie aus den Figuren hervorgeht, besteht ein solches elektrisches/elektronisches Installationsgerät mit einem in einer Installationsdose I unterzubringenden, als Einsatz E ausgeführten, in seinem Gehäuse 1 mehrere elektrische/elektronische Bauteile 2 sowie zumindest eine elektrische Leiterplatte 3 aufweisenden ersten Funktionsmodul, welches rückseitig mit Verbindungselementen 4 zum Anschluss an ein Installationssystem eines Gebäudes sowie frontseitig mit einem elektrischen Steckerteil 5 versehen ist, welches zum Anschluss eines wandseitig anzuordnenden, als Aufsatz A ausgebildeten, zweiten Funktionsmodul vorgesehen ist. Das als Aufsatz A ausgebildete zweite Funktionsmodul weist zur wiederlösbaren Ankopplung von elektrischen/elektronischen Geräten G frontseitig eine zylindrische, topfförmige Vertiefung 6 auf, in welcher eine, mehrere kreisförmig angeordnete elektrische Schleifbahnen 7 aufweisende Koppelleiterplatte 8 angeordnet ist. Die elektrischen Schleifbahnen 7 stehen über ein mit dem elektrischen Steckerteil 5 des Einsatzes E koppelbares elektrisches Buchsenteil 9 mit der im Gehäuse 1 des Einsatzes E angeordneten elektrischen Leiterplatte 3 elektrisch leitend in Verbindung.

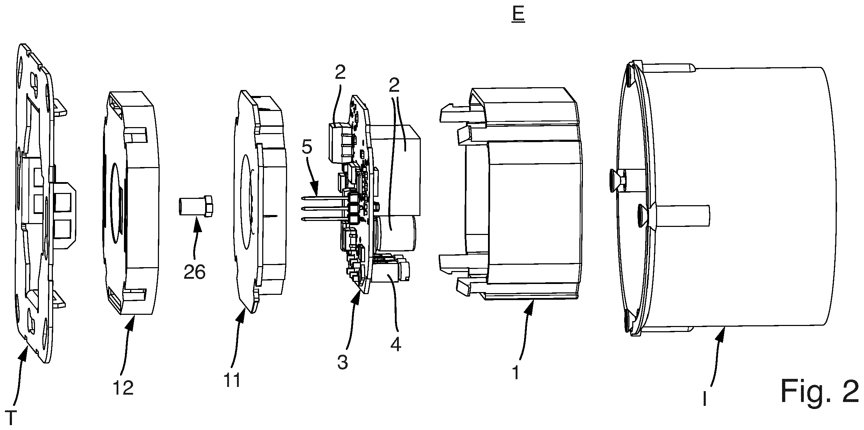

Wie insbesondere aus Figur 2 hervorgeht, besteht der Einsatz E hauptsächlich aus einer, mit mehreren elektrischen/elektronischen Bauteilen 2 bestückten elektrischen Leiterplatte 3, einem zur Aufnahme der elektrischen Leiterplatte 3 vorgesehenen Gehäuse 1, einem am Gehäuse 1 festzulegenden Zwischendeckel 11 und einem ebenfalls am Gehäuse 1 festzulegenden, mit einer Tragplatte T ausrüstbaren Enddeckel 12. Wie bereits erwähnt, ist der Einsatz E zur Aufnahme in einer handelsüblichen Installationsdose I vorgesehen. Die elektrische Leiterplatte 3 ist mit mehreren zur Funktion notwendigen elektrischen/elektronischen Bauteilen 2 bestückt. Dabei weist die elektrische Leiterplatte 3 das Steckerteil 5 und die Verbindungselemente 4 auf, über welche der Anschluss an ein Installationssystem eines Gebäudes hergestellt wird. Zur Energieversorgung der an den Aufsatz A ankoppelbaren elektrischen/elektronischen Geräte G weist die Leiterplatte 3 zudem ein Netzteil auf. Das auf der Leiterplatte 3 befindliche Steckerteil 5 ist als dreipolige Stiftleiste ausgeführt. Beim vorliegenden Ausführungsbeispiel besteht die Tragplatte T aus Metall und ist über angeformte Befestigungselemente am Enddeckel 12 festgelegt. Es ist jedoch genauso gut möglich, eine aus Kunststoff bestehende Tragplatte zu verwenden, die beispielsweise an das Gehäuse 1 beziehungsweise dessen Enddeckel 12 angeformt ist. Das Gehäuse 1 dient zur Aufnahme der mit den elektrischen Bauteilen 2 bestückten Leiterplatte 1 und wird verrastend mittels des Zwischendeckels 11 und des Enddeckels 12 frontseitig verschlossen.

Wie des Weiteren aus den Figuren hervorgeht, besteht der Aufsatz A hauptsächlich aus der zweiten elektrischen Koppelleiterplatte 8, einem mit der zylindrischen, topfförmigen Vertiefung 6 versehenen, von einem Designrahmen R umgebenen Zentralstück Z sowie einer Verriegelungseinrichtung, einem Koppelmagneten 13 und einer Abdeckung 14. Die elektrische Koppelleiterplatte 8 wird frontseitig in die topfförmige Vertiefung 6 des Zentralstücks Z eingesetzt und kommt letztendlich auf der frontseitigen Bodenfläche 15 der zylindrischen, topfförmigen Vertiefung 6 zur Anlage. Über zwei, einstückig mit der Umfangswandung 23 der zylindrischen, topfförmigen Vertiefung 6 ausgebildete Rastlaschen 10 wird die elektrische Koppelleiterplatte 8, positionsgerecht auf der Bodenfläche 15 aufliegend, im Innenraum der zylindrischen topfförmigen Vertiefung 6 gehalten. Die Verriegelungseinrichtung weist eine Hebelanordnung, bestehend aus einem ersten Hebel 16 und einem zweiten Hebel 17 auf, welche verstellbar an der dem Einsatz E zugewandten Seite des Zentralstücks Z angeordnet sind. Am ersten Hebel 16 der Hebelanordnung ist ein erster Haltemagnet 18 befestigt, welcher mit einem, an der dem Einsatz E zugewandten Seite des Zentralstücks Z festgelegten zweiten Haltemagneten 19 zusammenwirkt. Zudem weist das Zentralstück Z an seiner dem Einsatz E zugewandten Seite eine Aufnahmetasche 20 auf, in welcher der Koppelmagnet 13 festgelegt ist, welcher mit einem Gegenmagneten 21 eines anzukoppelnden elektrischen/elektronischen Gerätes G haltend zusammenwirkt.

Wie des Weiteren aus den Figuren hervorgeht, ist das am Aufsatz A vorhandene elektrische Buchsenteil 9 als dreipolige Buchsenleiste ausgeführt und steht elektrisch leitend - wie bereits erwähnt - mit dem als dreipolige Stiftleiste ausgeführten elektrischen Steckerteil 5 des Einsatzes E in Verbindung. Wie ebenfalls bereits beschrieben, ist am Aufsatz A eine, eine mechanische Wirkverbindung mit dem angekoppelten elektrischen/elektronischen Gerät G herstellende Verriegelungseinrichtung verstellbar gelagert, deren Hebelanordnung aus einem ersten Hebel 16 und aus einem zweiten Hebel 17 besteht. Die Lagerung der beiden Hebel 16, 17 wird zudem durch angeformte Elemente der Abdeckung 14 unterstützt, welche an der dem Einsatz E zugewandten Rückseite des Zentralstücks Z verrastet wird. Über eine Gelenkanordnung steht der ersten Hebel 16 mit dem zweiten Hebel 17 in Wirkverbindung, so dass die am ersten Hebel 16 bewirkten Bewegungen über die Gelenkanordnung auf den zweiten Hebel 17 übertragen werden. An jedem der beiden Hebel 16, 17 ist jeweils ein messerartig ausgeführtes Riegelelement 22 angeformt. Die beiden Riegelelemente 22 durchgreifen partiell die Umfangswand 23 der zylindrischen, topfförmigen Vertiefung 6. Deshalb sind in die Umfangswand 23 zwei schlitzförmige Ausnehmungen 24 eingeformt. Über eine Schraubverbindung wird der Aufsatz A am Einsatz E befestigt. Zu diesem Zweck ist eine Schraube 25 vorgesehen, über welche der Aufsatz A an den Einsatz E angeschraubt wird. Die Schraube 25 wirkt dabei mit einer am Enddeckel 12 des Gehäuses 1 gehaltenen Schraubbuchse 26 zusammen. Die Gelenkanordnung der beiden Hebel 16, 17 besteht aus einer Gelenkgabel 31, welche an eines der beiden freien Enden des ersten Hebels 16 angeformt ist und aus einem Gelenkkopf 32, welcher an das eine der beiden freien Enden des zweiten Hebels 17 angeformt ist. Die Gelenkgabel 31 und der Gelenkkopf 32 bilden somit die Gelenkanordnung. Beim vorliegenden Ausführungsbeispiel ist sowohl der erste Hebel 16 als auch der zweite Hebel 17 L-förmig ausgeführt. Jeder der beiden Hebel 16, 17 ist über ein einziges Drehlager 33 verstellbar an der Unterseite des Zentralstücks Z des Aufsatzes A gelagert. Um die beiden Hebel 16, 17 in ihrer Verriegelungsstellung zu halten, ist an den ersten Hebel 16 ein erster Haltemagnet 18 angebracht. Dieser befindet sich an dem freien Ende des ersten Hebels 16, welcher der Gelenkanordnung abgewandt ist. Diesem ersten Haltemagneten 18 zugeordnet, ist an der Unterseite des Zentralstückes Z ein zweiter Haltemagnet 19 vorhanden. Dieser zweite Haltemagnet 19 befindet sich, sicher gehalten, in einer, an die Unterseite des Zentralstückes Z angeformten Halteklammer. Die beiden Haltemagnete 18, 19 wirken derart anziehend miteinander zusammen, so dass die beiden Hebel 16, 17 zuverlässig in ihrer Verriegelungsstellung gehalten werden.

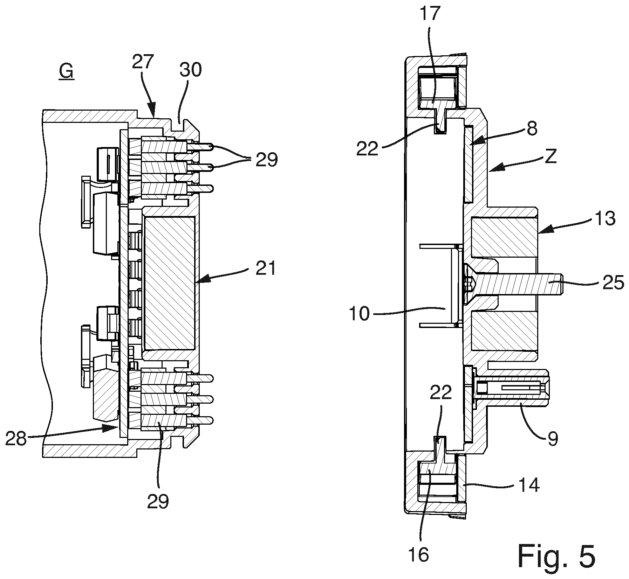

Wie insbesondere aus Figur 5 hervorgeht, weist jedes zur Ankopplung vorgesehene elektrische/elektronische Gerät G eine Gehäuseanordnung auf, welche mit einem hutförmigen Koppelteil 27 versehen ist. Das gehäuseseitige hutförmige Koppelteil 27 nimmt in seinem Innenraum eine elektrische Geräteleiterplatte 28 auf. Die elektrische Geräteleiterplatte 28 ist, zur Kontaktierung mit den drei elektrischen Schleifbahnen 7 der elektrischen Koppelleiterplatte 8, mit sechs Schleifkontakte 29 bestückt. Jeweils zwei Schleifkontakte 29 sind dabei einer der drei elektrischen Schleifbahnen 7 zugeordnet, so dass der Abgriff redundant über jeweils zwei Kontaktstellen erfolgt. Außerdem ist im Innenraum des hutförmigen Koppelteiles 27 der mit dem Koppelmagneten 13 des Aufsatzes A haltend zusammenwirkende Gegenmagnet 21 untergebracht. Die anzukoppelnden elektrischen/elektronischen Geräte G können unterschiedlich gestaltete Gehäuseanordnungen aufweisen, wobei dann darauf abgestimmte, unterschiedliche Funktionsbauteile zur Verwendung kommen können. Beispielsweise können die elektrischen/elektronischen Geräte G als Leuchten, Lautsprecher, Kameras, Präsenzmelder, Bewegungsmelder und so weiter ausgeführt sein. Die hutförmigen Koppelteile 27 der anzukoppelnden elektrischen/elektronischen Geräte G sind jedoch immer identisch ausgestaltet. Das hutförmige Koppelteil 27 der zur Ankopplung vorgesehenen elektrischen/elektronischen Geräte G stellt somit ein Passstück für die im Zentralstück Z des elektrischen/elektronischen Installationsgerätes befindliche topfförmige Vertiefung 6 dar. Wie insbesondere aus Figur 5 hervorgeht, ist in der Außenwand des hutförmigen Koppelteils 27 eine, umlaufend angeordnete, nutförmige Ausnehmung 30 eingebracht, welche mit den beiden Riegelelementen 22 des ersten Hebels 16 und des zweiten Hebels 17 der im Aufsatz A beziehungsweise im Zentralstück Z des elektrischen/elektronischen Installationsgerätes befindlichen Verriegelungseinrichtung zusammenwirkt. Da die Riegelelemente 22 der beiden Hebel 16, 17, wie bereits beschrieben, messerartig ausgeführt sind und das hutförmige Koppelteil 27 als Wirkpartner eine umlaufend angeordnete, nutförmige Ausnehmung 30 aufweist, können die angekoppelten elektrischen/elektronischen Geräte G selbst dann vom Benutzer auf einfache Art und Weise durch Verdrehen funktionsoptimiert ausgerichtet werden, wenn die Verriegelungseinrichtung wirksam ist, also eine unberechtigte Entnahme der elektrischen/elektronischen Geräte G verhindert wird.

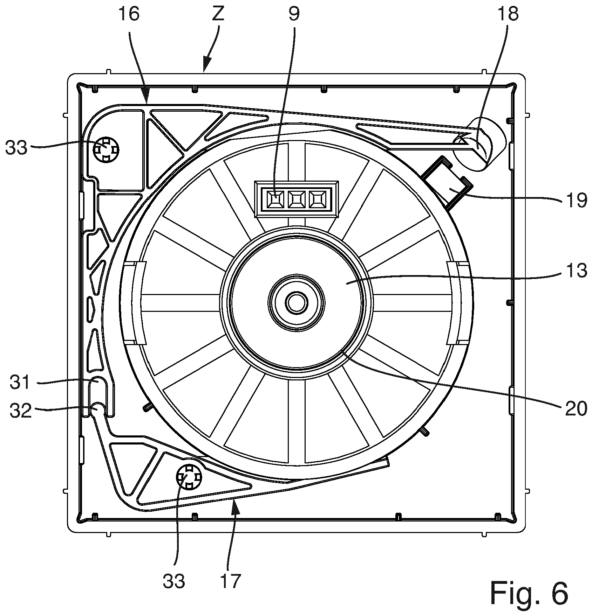

Wie insbesondere aus Figur 6 hervorgeht, befinden sich die beiden Hebel 16, 17 der Verriegelungsanordnung in ihrer Verriegelungsposition. In dieser Position wirken die beiden Haltemagnete 18, 19, wie bereits beschreiben, derart anziehend miteinander zusammen, so dass die beiden Hebel 16, 17 zuverlässig in ihrer Verriegelungsstellung gehalten werden. Die beiden messerartig ausgeführten Riegelelemente 22 der beiden Hebel 16, 17 durchgreifen die Umfangswandung 23 der topfförmigen Vertiefung 6 und kommen letztendlich mit der nutförmigen Ausnehmung 30 des hutförmigen Koppelteils 27 des angekoppelten elektrischen/elektronischen Gerätes G in Eingriff. Die Verriegelungseinrichtung ist somit wirksam und eine unberechtigte Entnahme von angekoppelten elektrischen/elektronischen Geräten G ist wirkungsvoll verhindert.

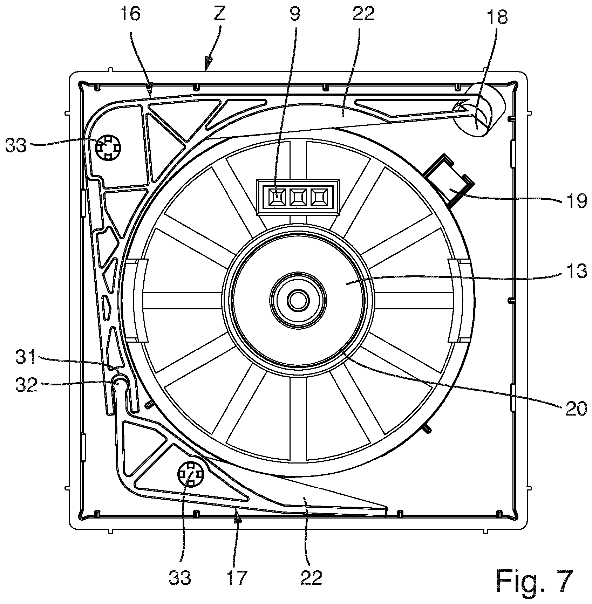

Wie insbesondere aus Figur 7 hervorgeht, befinden sich die beiden Hebel 16, 17 der Verriegelungsanordnung in ihrer Entriegelungsposition. In dieser Position wird die einander anziehende Wirkung der beiden Haltemagnete 18, 19 aufgehoben, weil ein - der Einfachheit halber nicht dargestelltes - Lösewerkzeug, versehen mit einem Lösemagneten, in die Nähe des, am ersten Hebel 16 befindlichen ersten Haltemagneten 18 gebracht wird. Die beiden messerartig ausgeführten Riegelelemente 22 der beiden Hebel 16, 17 werden durch die Wirkung des Lösewerkzeuges aus der nutförmigen Ausnehmung 30 des hutförmigen Koppelteils 27 des angekoppelten elektrischen/elektronischen Gerätes G herausbewegt, weil die beiden Hebel 16, 17 durch die Wirkung des Lösewerkzeuges um ihre Drehlager 33 verschwenkt werden. Die Verriegelungseinrichtung ist somit nicht mehr wirksam, so dass eine berechtigte Entnahme von elektrischen/elektronischen Geräten G vorgenommen werden kann.

Vorteilhafterweise ist die Verriegelungseinrichtung derart gestaltet, dass keinerlei Störungen (Zugangsöffnungen, Betätigungselemente und so weiter) an den Designteilen auftreten, womit trotz der Integration einer wirkungsvollen Verriegelungseinrichtung ein ungestörtes Erscheinungsbild der Designteile (Zentralstück Z, Designrahmen R) erhalten bleibt.

Es ist somit auf einfache Art und Weise ein aus einem Einsatz E und aus einem Aufsatz A bestehendes elektrisches/elektronisches Installationsgerät geschaffen, dessen Aufsatz A frontseitig zumindest die mechanische Ankopplung vieler verschiedenartig ausgeführter elektrischer/elektronischer Geräte G über eine einheitlich ausgeführte Ankoppeleinrichtung ermöglicht und dabei durch die Herstellung einer mechanischen Wirkverbindung die unberechtigte Entnahme eines angekoppelten elektrischen/elektronischen Gerätes G wirkungsvoll verhindert. Vorteilhafterweise ist beim vorliegenden Ausführungsbeispiel nicht nur eine einfache mechanische Ankopplung, sondern auch für eine einfache elektrische und datentechnische Ankopplung verschiedenartig ausgeführter elektrischer/elektronischer Geräte G über eine einheitlich ausgeführte Ankoppeleinrichtung Sorge getragen.

### Bezugszeichenliste

| | | | |
|---|---|---|---|
| 1 | Gehäuse | 31 | Gelenkgabel |
| 2 | Elektrische/elektronische Bauteil | 32 | Gelenkkopf |
| 3 | Elektrische Leiterplatte | 33 | Drehlager |
| 4 | Verbindungselemente | | |
| 5 | Elektrisches Steckerteil | A | Aufsatz |
| 6 | Topfförmige Vertiefung | E | Einsatz |
| 7 | Elektrische Schleifbahnen | G | Elektrische/elektronische Geräte |
| 8 | Elektrische Koppelleiterplatte | I | Installationsdose |
| 9 | Buchsenteil | R | Designrahmen |
| 10 | Rastlaschen | T | Tragplatte |
| 11 | Zwischendeckel | Z | Zentralstück |
| 12 | Enddeckel | | |
| 13 | Koppelmagnet | | |
| 14 | Abdeckung | | |
| 15 | Bodenfläche | | |
| 16 | Erster Hebel | | |
| 17 | Zweiter Hebel | | |
| 18 | Erster Haltemagnet | | |
| 19 | Zweiter Haltemagnet | | |
| 20 | Aufnahmetasche | | |
| 21 | Gegenmagnete | | |
| 22 | Riegelelemente | | |
| 23 | Umfangswand | | |
| 24 | Ausnehmungen | | |
| 25 | Schraube | | |
| 26 | Schraubbuchse | | |
| 27 | Hutförmiges Koppelteil | | |
| 28 | Elektrische Geräteleiterplatte | | |
| 29 | Schleifkontakte | | |
| 30 | Nutförmige Ausnehmung | | |

## Patentansprüche

1. Elektrisches/elektronisches Installationsgerät mit einem in einer Installationsdose unterzubringenden, als Einsatz (E) ausgeführten, in seinem Gehäuse (1) mehrere elektrische/elektronische Bauteile aufweisenden ersten Funktionsmodul, welches rückseitig mit Verbindungselementen (4) zum Anschluss an ein Installationssystem eines Gebäudes sowie frontseitig mit einem elektrischen Steckerteil (5) versehen ist, und mit einem als Aufsatz A ausgebildeten zweiten Funktionsmodul, wobei der Aufsatz (A) zur wiederlösbaren Ankopplung eines elektrischen/elektronischen Gerätes (G) frontseitig eine topfförmige Vertiefung (6) aufweist und das elektrische Steckerteil (5) zum Anschluss des wandseitig anzuordnenden zweiten Funktionsmoduls vorgesehen ist, **dadurch gekennzeichnet, dass** am Aufsatz (A) eine, zur Herstellung einer mechanischen Wirkverbindung mit einem hutförmigen Koppelteil (27) des anzukoppelnden elektrischen/elektronischen Gerätes (G) ausgebildete, als Hebelanordnung ausgeführte Verriegelungseinrichtung angeordnet ist, welche mit zumindest einem Riegelelement (22) die Umfangswand (23) der topfförmigen Vertiefung (6) durchgreift, so dass das Riegelelement (22) entnahmesperrend mit dem in die topfförmige Vertiefung (6) eingesteckten hutförmigen Koppelteil (27) des elektrischen/elektronischen Gerätes (G) in Wirkverbindung kommen kann, wobei die Hebelanordnung der Verriegelungseinrichtung zur Aufrechterhaltung der mechanischen Wirkverbindung mit zumindest einem ersten Haltemagneten (18) versehen ist, welcher mit zumindest einem am Aufsatz (A) festgelegten zweiten Haltemagneten (19) in Wirkverbindung steht.

2. Elektrisches/elektronisches Installationsgerät nach Anspruch 1, **dadurch gekennzeichnet, dass** die Hebelanordnung der Verriegelungseinrichtung einen ersten Hebel (16) und einen an den ersten Hebel (16) gelenkig angekoppelten zweiten Hebel (17) aufweist, welche verstellbar am Aufsatz (A) gelagert sind und welche jeweils mit zumindest einem Riegelelement (22) versehen sind.

3. Elektrisches/elektronisches Installationsgerät nach einem der Ansprüche 1 oder 2, **dadurch gekennzeichnet, dass** im Aufsatz (A) zumindest ein auf die Hebelanordnung der Verriegelungseinrichtung einwirkendes Federelement angeordnet ist.

4. Elektrisches/elektronisches Installationsgerät nach einem der Ansprüche 1 bis 3, **dadurch gekennzeichnet, dass** der Aufsatz (A) über zumindest eine Schraubverbindung am Einsatz (E) befestigt ist.

5. Elektrisches/elektronisches Installationsgerät nach einem der Ansprüche 1 bis 4, **dadurch gekennzeichnet, dass** am Gehäuse (1) des Einsatzes (E) eine die wandseitige Festlegung des Einsatzes (E) sicherstellende Tragplatte (T) angeordnet ist.

6. Elektrisches/elektronisches Installationsgerät nach Anspruch 5, **dadurch gekennzeichnet, dass** die Tragplatte (T) einstückig Bestandteil des Gehäuses (1) des Einsatzes (E) ist.

7. Elektrisches/elektronisches Installationsgerät nach einem der Ansprüche 1 bis 6, **dadurch gekennzeichnet, dass** der Aufsatz (A) ein Zentralstück (Z) aufweist, welches unter Zwischenschaltung eines Designrahmens (R) am Einsatz (E) gehalten ist.

8. Elektrisches/elektronisches Installationsgerät nach einem der Ansprüche 1 bis 7, **dadurch gekennzeichnet, dass** im Gehäuse (1) des Einsatzes (E) eine elektrische Leiterplatte (3) untergebracht ist, die mit einem Netzteil in Verbindung steht.

9. Anordnung umfassend ein elektrisches/elektronisches Installationsgerät nach einem der Ansprüche 1 bis 8 und ein elektrisches/elektronisches Gerät (G), **dadurch gekennzeichnet, dass** das in die topfförmige Vertiefung (6) des Aufsatzes (A) einsteckbare hutförmige Koppelteil (27) des elektrischen/elektronischen Gerätes (G) außenseitig zumindest eine, umlaufend angeordnete, nutförmige Ausnehmung (30) aufweist, welche mit zumindest einem Riegelelement (22) der im Aufsatz (A) des elektrischen/elektronischen Installationsgerätes befindlichen Verriegelungseinrichtung zusammenwirkt.

10. Anordnung nach Anspruch 9, **dadurch gekennzeichnet, dass** die zur Kopplung des elektrischen/elektronischen Gerätes (G) vorgesehene, im Aufsatz (A) befindliche topfförmige Vertiefung (6) zylindrisch ausgeführt ist, und dass das zur Kopplung vorgesehene hutförmige Koppelteil (27) des elektrischen/elektronischen Gerätes (G) ebenfalls zylindrisch ausgeführt ist.

11. Anordnung nach Anspruch 9 oder 10, **dadurch gekennzeichnet, dass** die zwischen der Hebelanordnung der Verriegelungsreinrichtung und dem hutförmigen Koppelteil (27) des angekoppelten elektrischen/elektronischen Gerätes (G) bestehende mechanische Wirkverbindung mittels eines von außen zuzuführenden Lösewerkzeugs aufhebbar ist.

12. Anordnung nach Anspruch 11, **dadurch gekennzeichnet, dass** das Lösewerkzeug zumindest einen Lösemagneten aufweist, welcher zur Aufhebung der mechanischen Wirkverbindung mit dem zumindest einen, an der Verriegelungseinrichtung vorhandenen ersten Haltemagneten (18) zusammenwirkt.

13. Anordnung nach einem der Ansprüche 9 bis 12 **dadurch gekennzeichnet, dass** das an den Aufsatz (A) ankoppelbare elektrische/elektronische Gerät (G) eine Gehäuseanordnung aufweist, welche mit dem hutförmigen Koppelteil (27) versehen ist, und dass das elektrische/elektronische Gerät als Leuchte ausgeführt ist.

14. Anordnung nach einem der Ansprüche 9 bis 12 **dadurch gekennzeichnet, dass** das an den Aufsatz (A) ankoppelbare elektrische/elektronische Gerät (G) eine Gehäuseanordnung aufweist, welche mit dem hutförmigen Koppelteil (27) versehen ist, und dass das elektrische/elektronische Gerät als Bewegungsmelder ausgeführt ist.

15. Anordnung nach einem der Ansprüche 9 bis 12, **dadurch gekennzeichnet, dass** das an den Aufsatz (A) ankoppelbare elektrische/elektronische Gerät (G) eine Gehäuseanordnung aufweist, welche mit dem hutförmigen Koppelteil (27) versehen ist, und dass das elektrische/elektronische Gerät als Präsenzmelder ausgeführt ist.

16. Anordnung nach einem der Ansprüche 9 bis 12 **dadurch gekennzeichnet, dass** das an den Aufsatz (A) ankoppelbare elektrische/elektronische Gerät (G) eine Gehäuseanordnung aufweist, welche mit dem hutförmigen Koppelteil (27) versehen ist, und dass das elektrische/elektronische Gerät als Kamera ausgeführt ist.

17. Anordnung nach einem der Ansprüche 9 bis 12 **dadurch gekennzeichnet, dass** das an den Aufsatz (A) ankoppelbare elektrische/elektronische Gerät (G) eine Gehäuseanordnung aufweist, welche mit dem hutförmigen Koppelteil (27) versehen ist, und dass das elektrische/elektronische Gerät als Lautsprecher ausgeführt ist.

## Claims

1. Electrical/electronic installation device with a first functional module designed as an insert (E), to be accommodated in an installation box and having in its housing (1) a plurality of electrical/electronic components, which first functional module is provided on the rear side with connecting elements (4) for connection to an installation system of a building and on the front side with an electrical plug part (5), and with a second functional module designed as attachment (A), wherein the attachment (A) has a cup-shaped recess (6) on the front side for the re-releasable coupling of an electrical/electronic device (G) and the electrical plug part (5) is provided for connection of the second functional module to be arranged at the wall side, **characterized by the fact** that a locking device designed as lever arrangement is arranged on the attachment (A) for producing a mechanical operative connection with a hat-shaped coupling part (27) of the electrical/electronic device (G) to be coupled, which locking device engages with at least one locking element (22) through the circumferential wall (23) of the cup-shaped recess (6), so that the locking element (22) can come into operative connection, in a removal-locking manner, with the hat-shaped coupling part (27), inserted into the cup-shaped recess (6) of the electrical/electronic device (G), the lever arrangement of the locking device being provided, in order to maintain the mechanical operative connection, with at least one first holding magnet (18) which is in operative connection with at least one second holding magnet (19) fixed to the attachment (A).

2. Electrical/electronic installation device in accordance with Claim 1, **characterized by the fact** that the lever arrangement of the locking device comprises a first lever (16) and a second lever (17) hingedly coupled to the first lever (16), which are adjustably mounted on the attachment (A) and which are each provided with at least one locking element (22).

3. Electrical/electronic installation device in accordance with any of Claims 1 or 2, **characterized by the fact** that at least one spring element acting on the lever arrangement of the locking device is arranged in the attachment (A).

4. Electrical/electronic installation device in accordance with any of Claims 1 to 3, **characterized by the fact** that the attachment (A) is fastened to the insert (E) via at least one screw connection.

5. Electrical/electronic installation device in accordance with any of Claims 1 to 4, **characterized by the fact** that a support plate (T) ensuring the fixing of the insert (E) on the wall side is arranged on the housing (1) of the insert (E).

6. Electrical/electronic installation device in accordance with Claim 5, **characterized by the fact** that the support plate (T) is an integral part of the housing (1) of the insert (E).

7. Electrical/electronic installation device in accordance with any of Claims 1 to 6, **characterized by the fact** that the attachment (A) has a central piece (Z) which is held on the insert (E) with the interposition of a design frame (R).

8. Electrical/electronic installation device in accordance with any of Claims 1 to 7, **characterized by the fact** that the housing (1) of the insert (E) accommodates an electrical circuit board (3) which is connected to a power supply unit.

9. Arrangement comprising an electrical/electronic installation device in accordance with any of Claims 1 to 8 and an electrical/electronic device (G), **characterized by the fact** that the hat-shaped coupling part (27) of the electrical/electronic device (G), which can be inserted into the cup-shaped recess (6) of the attachment (A), has on the outside at least one groove-shaped recess (30) which is arranged circumferentially and which cooperates with at least one locking element (22) of the locking device located in the attachment (A) of the electrical/electronic installation device.

10. Arrangement in accordance with Claim 9, **characterized by the fact** that the cup-shaped recess (6) provided for coupling the electrical/electronic device (G) and located in the attachment (A) is of cylindrical design, and by the fact that the hat-shaped coupling part (27) of the electrical/electronic device (G) provided for coupling is also of cylindrical design.

11. Arrangement in accordance with Claim 9 or 10, **characterized by the fact** that the mechanical operative connection existing between the lever arrangement of the locking device and the hat-shaped coupling part (27) of the coupled electrical/electronic device (G) can be released by means of a release tool to be applied from the outside.

12. Arrangement in accordance with Claim 11, **characterized by the fact** that the release tool has at least one release magnet which cooperates with the at least one first holding magnet (18) present on the locking device in order to release the mechanical active connection.

13. Arrangement in accordance with any of Claims 9 to 12 **characterized by the fact** that the electrical/electronic device (G) which can be coupled to the attachment (A) has a housing arrangement which is provided with the hat-shaped coupling part (27), and by the fact that the electrical/electronic device is designed as a luminaire.

14. Arrangement in accordance with any of Claims 9 to 12 **characterized by the fact** that the electrical/electronic device (G) which can be coupled to the attachment (A) has a housing arrangement which is provided with the hat-shaped coupling part (27), and by the fact that the electrical/electronic device is designed as a movement detector.

15. Arrangement in accordance with any of Claims 9 to 12, **characterized by the fact** that the electrical/electronic device (G) which can be coupled to the attachment (A) has a housing arrangement which is provided with the hat-shaped coupling part (27), and by the fact that the electrical/electronic device is designed as a presence detector.

16. Arrangement in accordance with any of Claims 9 to 12 **characterized by the fact** that the electrical/electronic device (G) which can be coupled to the attachment (A) has a housing arrangement which is provided with the hat-shaped coupling part (27), and by the fact that the electrical/electronic device is designed as a camera.

17. Arrangement in accordance with any of Claims 9 to 12 **characterized by the fact** that the electrical/electronic device (G) which can be coupled to the attachment (A) has a housing arrangement which is provided with the hat-shaped coupling part (27), and by the fact that the electrical/electronic device is designed as a loud-speaker.

## Revendications

1. Appareil d'installation électrique/électronique avec un premier module fonctionnel réalisé sous forme d'insert (E), à loger dans un boîtier d'installation, comportant dans son boîtier (1) plusieurs composants électriques/électroniques, lequel appareil d'installation est pourvu sur la face arrière d'éléments de raccordement (4) pour le raccordement à un système d'installation d'un bâtiment et sur la face avant d'une partie de fiche électrique (5), et avec un deuxième module fonctionnel réalisé sous la forme d'une pièce jointe A, la pièce jointe (A) présentant sur la face avant un évidement (6) en forme de pot pour le couplage amovible d'un appareil électrique/électronique (G), et la partie de fiche électrique (5) étant prévue pour le raccordement du deuxième module fonctionnel à disposer du côté du mur, **caractérisé en ce qu'**un dispositif de verrouillage conçu comme un dispositif à levier est disposé sur la pièce jointe (A) pour réaliser une liaison mécanique active avec une partie d'accouplement en forme de chapeau (27) de l'appareil électrique/électronique (G) à accoupler, lequel dispositif de verrouillage s'engage avec au moins un élément de verrouillage (22) à travers la paroi périphérique (23) de l'évidement en forme de pot (6), de sorte que l'élément de verrouillage (22) peut venir en liaison active, par verrouillage de retrait, avec la pièce d'accouplement en forme de chapeau (27), insérée dans l'évidement (6) en forme de pot, l'agencement de levier du dispositif de verrouillage étant pourvu, pour maintenir la liaison active mécanique, d'au moins un premier aimant de maintien (18) qui est en liaison active avec au moins un deuxième aimant de maintien (19) fixé sur la pièce jointe (A).

2. Appareil d'installation électrique/électronique selon la revendication 1, **caractérisé en ce que** l'agencement de levier du dispositif de verrouillage comprend un premier levier (16) et une deuxième levier (17) qui est couplé de manière articulée au premier levier (16), qui sont montés de manière réglable sur la pièce jointe (A) et qui sont chacun munis d'au moins un élément de verrouillage (22).

3. Appareil d'installation électrique/électronique selon l'une des revendications 1 ou 2, **caractérisé en ce qu'**au moins un élément de ressort agissant sur l'agencement de leviers du dispositif de verrouillage est disposé dans la pièce jointe (A).

4. Appareil d'installation électrique/électronique selon l'une des revendications 1 à 3, **caractérisé en ce que** la pièce jointe (A) est fixée à l'insert (E) au moyen d'au moins un raccord à vis.

5. Appareil d'installation électrique/électronique selon l'une des revendications 1 à 4, **caractérisé en ce qu'**une plaque de support (T), qui assure la fixation de l'insert (E) au mur, est disposée sur le boîtier (1) de l'insert (E).

6. Appareil d'installation électrique/électronique selon la revendication 5, **caractérisé en ce que** la plaque de support (T) fait partie intégrante du boîtier (1) de l'insert (E).

7. Appareil d'installation électrique/électronique selon l'une des revendications 1 à 6, **caractérisé en ce que** la pièce jointe (A) comporte une pièce centrale (Z) qui est maintenue sur l'insert (E) avec interposition d'un cadre design (R).

8. Appareil d'installation électrique/électronique selon l'une des revendications 1 à 7, **caractérisé en ce que** le boîtier (1) de l'insert (E) reçoit une carte de circuit électrique (3) qui est connectée à une unité d'alimentation électrique.

9. Arrangement comprenant un appareil d'installation électrique/électronique selon l'une des revendications 1 à 8 et un appareil électrique/électronique (G), **caractérisé en ce que** la partie d'accouplement en forme de chapeau (27) de l'appareil électrique/électronique (G), qui peut être insérée dans l'évidement (6) en forme de pot de la pièce jointe (A), présente à l'extérieur au moins un évidement (30) en forme de rainure, qui est disposé de manière périphérique et qui coopère avec au moins un élément de verrouillage (22) du dispositif de verrouillage se trouvant dans la pièce jointe (A) de l'appareil électrique/électronique.

10. Arrangement selon la revendication 9, **caractérisé en ce que** l'évidement en forme de pot (6) prévu pour le couplage de l'appareil électrique/électronique (G) et situé dans la pièce jointe (A) est de conception cylindrique, et **en ce que** la partie de couplage en forme de chapeau (27) de l'appareil électrique/électronique (G) prévu pour le couplage est également de conception cylindrique.

11. Arrangement selon la revendication 9 ou 10, **caractérisé en ce que** la liaison mécanique active existant entre le dispositif de levier du dispositif de verrouillage et la partie d'accouplement en forme de chapeau (27) de l'appareil électrique/électronique couplé (G) peut être libérée au moyen d'un outil de desserrage devant être appliqué de l'extérieur.

12. Arrangement selon la revendication 11, **caractérisé en ce que** l'outil de desserrage comporte au moins un aimant de desserrage qui interagit avec le au moins un premier aimant de maintien (18) présent sur le dispositif de verrouillage afin d'annuler la liaison mécanique active.

13. Arrangement selon l'une des revendications 9 à 12 **caractérisé en ce que** l'appareil électrique/électronique (G) qui peut être couplé à la pièce jointe (A) présente un agencement de boîtier qui est pourvu de la partie de couplage en forme de chapeau (27), et **en ce que** l'appareil électrique/électronique est conçu comme une lumière.

14. Arrangement selon l'une des revendications 9 à 12 **caractérisé en ce que** l'appareil électrique/électronique (G) qui peut être couplé à la pièce jointe (A) présente un agencement de boîtier qui est pourvu de la partie de couplage en forme de chapeau (27), et **en ce que** l'appareil électrique/électronique est conçu comme un détecteur de mouvement.

15. Arrangement selon l'une des revendications 9 à 12, **caractérisé en ce que** l'appareil électrique/électronique (G) qui peut être couplé à la pièce jointe (A) présente un agencement de boîtier qui est pourvu de la partie de couplage en forme de chapeau (27), et **en ce que** l'appareil électrique/électronique est conçu comme un détecteur de présence.

16. Arrangement selon l'une des revendications 9 à 12 **caractérisé en ce que** l'appareil électrique/électronique (G) qui peut être couplé à la pièce jointe (A) présente un agencement de boîtier qui est pourvu de la partie de couplage en forme de chapeau (27), et **en ce que** l'appareil électrique/électronique est conçu comme un caméra.

17. Arrangement selon l'une des revendications 9 à 12 **caractérisé en ce que** l'appareil électrique/électronique (G) qui peut être couplé à la pièce jointe (A) présente un agencement de boîtier qui est pourvu de la partie de couplage en forme de chapeau (27), et **en ce que** l'appareil électrique/électronique est conçu comme un haut-parleur.
